# EUROPEAN PATENT APPLICATION

(11) **EP 0 757 503 A2**
(43) Date of publication of application: **05.02.1997**
(21) Application number: 96202078.0
(22) Date of filing: 23.07.1996
(51) Int. Cl.: H04Q 11/00, H04Q 11/04

(54) **Device and method for the implementation of protocol functions of the ATM adaptation layer (AAL1) in a B-ISDN network**

(30) Priority: 25.07.1995 IT MI951607
(71) Applicant: Italtel s.p.a., 20149 Milano (IT)
(72) Inventor: Merli, Edoardo, 43100 Parma (IT); Canato, Luigi, 20036 Meda (MI) (IT)
(74) Representative: Giustini, Delio

(57) **Abstract**

The invention concerns a device (AALu and AALd) and a method for the implementation of protocol functions of the ATM Adaptation layer (AAL) in a B-ISDN network, particularly for flows of data requiring time relation between source and destination.
The time relation method foresees the following phases:
- transmit (AAL1_A) information packets (SYNCH_A) having null information content indicating a synchronization request;
- receive (AAL1_B) said information packets, obtain synchronization information from the same and put the receiver in synchronization condition;
- transmit (AAL1_B) information packets (SYNCH_RECEIVER_B) having null information content condition;
- receive (AAL1_A) said information packets (SYNCH_RECEIVER_B) indicating the occurred synchronization;
- recognize (AAL1_A) the occurred synchronization) of the receiver and start the transmission of information packets having information content not null.

## Description

The present invention generally concerns broad band networks or B-ISDN (Broadband Integrated Service Digital Network) of the ATM type (Asynchronous Transfer Mode) and finds application both in access parts to the network (terminals, concentrators, adapters, Interworking Unit), and in switching nodes (server).

More in particular, the invention concerns a device and a method for the implementation of control functions of the ATM adaptation layer ATM (AAL) in a B-ISDN network, particularly for flows of data requiring time relation between source and destination.

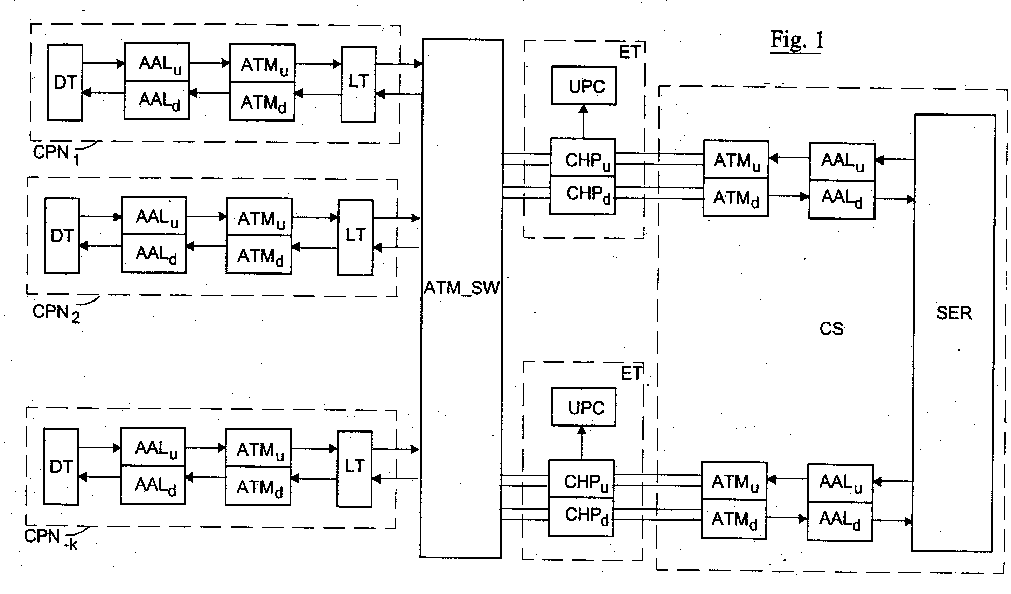

The invention finds application in the transfer of signals through broadband networks. Figure 1 shows, as an example only, an ATM node outlining a switching network ATM_SW, to which different access posts CPN₁,...,CPN_{K} (Customer Premises Network) are connected and a server CS dedicated for instance to Video On Demand services.

General data of applications (audio, video, data transmission) residing in a user post connected to the B-ISDN network are structured in packets having length ranging from some bytes to tenths of hundred bytes. To transmit these packets on the ATM networks it is necessary to adapt the packet format to the ATM cell format, consisting of 48 information bytes or payload and 5 header data, for a total number of 53 bytes.

Therefore, packets must be divided into segments to be included in the payload of ATM cells. In order to carry out typical checks of transmission networks (error, sequence, etc.) some bytes out of the 48 bytes available are used by additional information while the remaining bytes are used by the message portions (segments). Of course, the user receiving the cells shall make the contrary operation (re-assembly) to obtain again the message starting from ATM payloads.

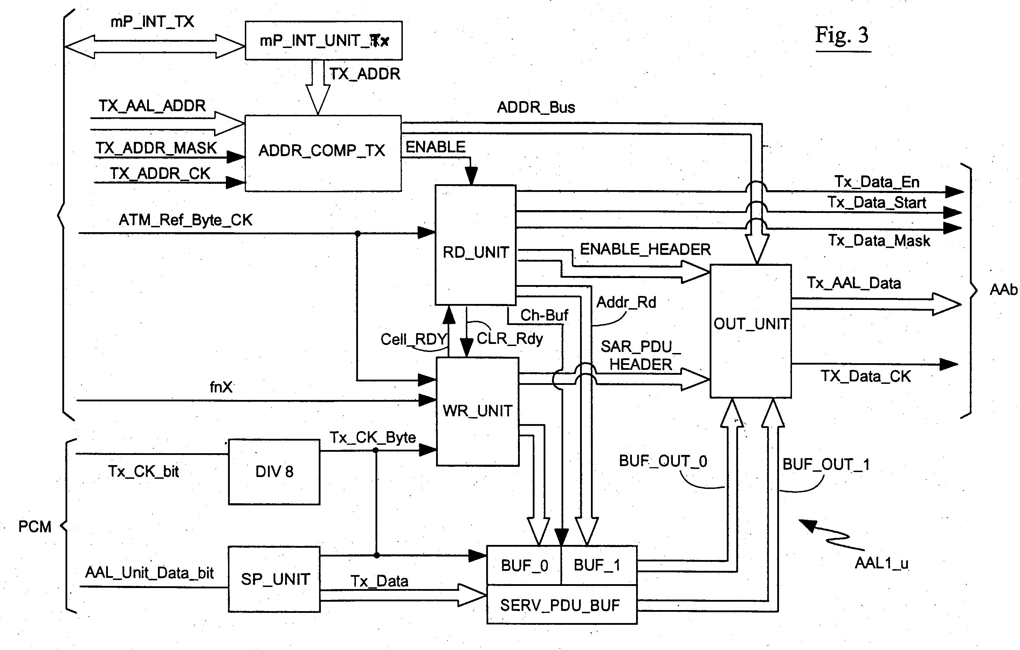

The conversion of user information into ATM cells to be sent on line is made through an ordered sequence or stack of protocols at different levels, outlined in Fig. 2 where rectangles represent the complex of operations made on data. The transmission of information involves the execution of different hierarchical level protocols from top to bottom; during receipt are carried out from bottom to top.

The invention concerns the so-called ATM adaptation layer, called AAL (ATM Adaptation Layer), which, as shown in the attached Fig. 2, is placed between higher protocol layers HLP (Higher Layer Protocol), that is the user's application layer and the ATM layer.

More in particular the invention concerns an AAL layer, called AAL, of class 1 or AAL1, for data flows requiring time relations between source and destination.

Typically, these data flows are generated by applications for the control of audio and video services.

In presence of applications requiring time relation between sources and destinations, the AAL1 adaptation layer shall carry the information through the B-ISDN network in order to distribute time and synchronization information intrinsic to the services, without altering the same.

Scope of the present invention is to embody a hardware implementation of protocol functions of the ATM class 1 (AAL1) adaptation layer capable to control the adaptation of data flows requiring a time relation between source and destination and allowing to control in a simple and effective way the synchronization among processes and the recovery by receiving devices of the transmission clock of transmission devices.

An additional scope of the present invention is to supply a device capable to attain the scopes mentioned above, irrespective of "jitter" characteristics of the connection ATM network.

Particular scope of this invention is to offer a method allowing to control in a simple and effective way the synchronization among processes when connections among the devices are established.

The invention consists of a device implemented according to what carried out under claim 1.

Moreover, the invention consists of a method implemented in compliance with what described under claim 3.

Additional advantageous characteristics form the object of the ensuing claims.

Such a device, finds its application in service multiplexers allowing to realize the ATM class 1 adaptation layer, both during receipt and transmission.

Fig. 1, partly already described, shows use points of the device according to the present invention, marked AALu (upstream side) and AALd (downstream side), in the B-ISDN network.

The AAL1 device implements the following operations during transmission:
- it stores the flow of bits received in the serial mode, together with a synchronization signal, from the interface towards the user's layer (HLP);
- it checks the presence of a transmission control information, concerning the specific application, on the ATM interface layer;
- following the reception of this transmission control information, it processes the bits received in order to form an information packet, totaling 48 bytes;
- it sends said information packet, corresponding to the payload of an ATM cell, towards the interface of the ATM layer.
The AAL1 device implements also the following operations during receipt:
- it receives the payload of an ATM cell, consisting of a 48 bytes information packet from the ATM layer;
- it converts said information packet in a serial flow of data;
- it draws the synchronization information (of bits) from the data flow, equalizing time changes introduced by the ATM network;
- it sends said data serial flow, together with the recovered synchronization signal, to the user layer (HLP).

The structural and functional characteristics and additional advantages as for the performances of the device according to the present invention shall be better understood from the following description, given as an example and not limited to the same, together with the attached figures, where:
figure 1, already described, shows an ATM network;
figure 2, already described, shows the protocol reference models;
figure 3 is a diagram showing the hardware implementation according to the invention of the ATM class 1 adaptation layer, transmission side;
figure 4 shows the structure of an information packet for data transfer from the element in fig. 3 to the ATM layer;
figure 5 is a diagram showing the structure of the block of the element in fig. 3 for the insertion and transmission of information for the source clock recovery according to the invention;
figure 6 is a diagram showing the hardware implementation according to the invention of the ATM class 1 adaptation layer, receipt side;
figure 7 is a diagram showing the structure of the block of the element in fig. 6 for the source clock recovery according to the invention;
figure 8 is a diagram showing filling levels of a buffer for the absorption of the "jitter" of the ATM network;
figure 9 is a digital phase comparator of block in fig. 7;
figure 10 is a diagram showing more in detail the structure of a device for the extraction of RTS information
figure 11 is a diagram showing more in detail a transmission clock reconstruction unit.
figure 12 shows a diagram of the starting synchronization procedure between two devices according to the present invention.

Making reference to the attached Fig. 3, a hardware implementation of the ATM adaptation layer, transmission side has been globally indicated with an element AAL1_u.

The AAL1_u element is connected through an AAb interface, to the ATM layer and is connected through a PCM serial interface, to the HLP application level.

The AAL1_u element includes an address comparator ADDR_COMP_TX connected to a bus Tx_AAL_ADDR, to a Tx_ADDR_MASK wire and to a Tx_ADDR_Ck wire of the AAb interface to the ATM layer.

The address comparator ADDR_COMP_TX is also connected, through a Tx_ADDR bus, to a microprocessor interface unit mP_INT_UNIT_Tx.

The main function of the address comparator ADDR_COMP_TX consists in comparing the addresses given by the ATM layer on the Tx_AAL_ADDR wires with an address given on the Tx_ADDR bus from the interface unit to a mP_INT_UNIT_Tx microprocessor.

The address value given by the mP_INT_UNIT_Tx unit can be set from the outside through sending of appropriate signals to the microprocessor interface mP_INT_Tx of the mP_INT_UNIT_Tx unit.

The address comparator ADDR_COMP_TX is connected through a bus ADDR_Bus to an output unit OUT_UNIT.

The AAL1_u element includes a serial parallel converter SP_UNIT which converts in a parallel format on 8 bits, data received on the AAL_Unit_Data_Bit wire of the PCM interface.

An eight module divider DIV_8 divides the clock signal of the application layer HLP received on the Tx_Ck_bit wire of the PCM interface.

The serial parallel converter SP_UNIT gives data in parallel format on a bus Tx_Data connected to a buffer SERV_PDU_BUF.

The buffer SERV_PDU_BUF includes two separate memory units BUF_0 and BUF_1 each one able to store a 47 information packet.

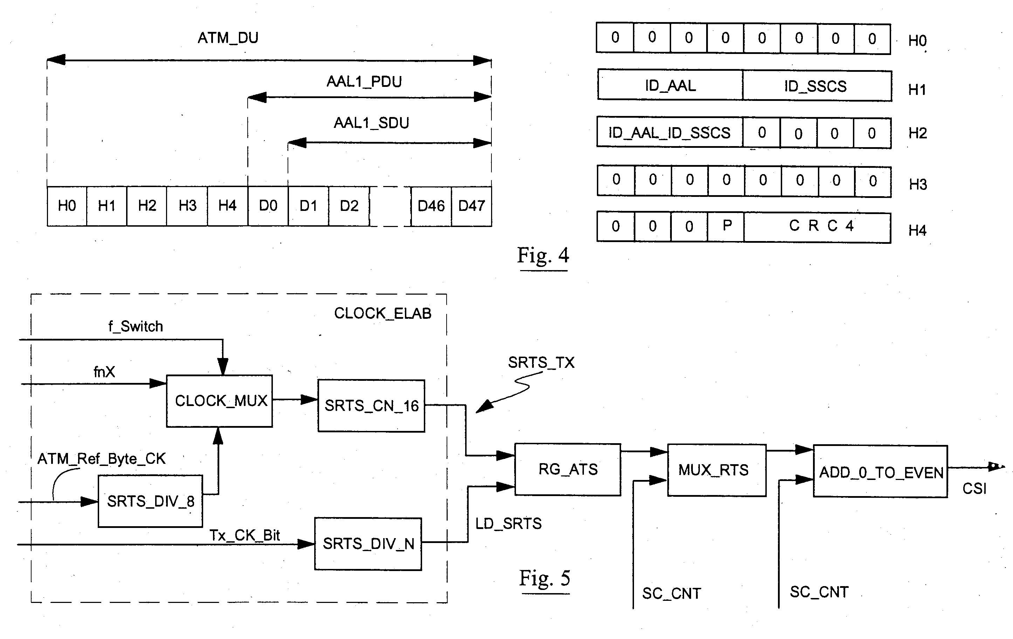

Referring to the attached figure 4 this 47-byte information packet has been called AAL1_SDU (AAL1 Service Data Unit).

The SERV_PDU_BUF buffer is connected to a writing control unit WR_UNIT through the Addr_Wr bus.

The buffer SERV_PDU_BUF is also connected to a reading control unit RD_UNIT through the Addr_Rd bus.

The two control units WR_UNIT and RD_UNIT are both also connected to the SERV_PDU_BUF buffer through the Ch_Buf wire and are connected each other through Cell_Rdy and CLR_Rdy wires.

The reading control unit RD_UNIT is connected to the AAb interface through Tx_data_start Tx_data_mask and Tx_Data_En.

The reading control unit RD_UNIT is also connected to the address comparator ADDR_COMP_TX through a wire ENABLE.

Outputs of the SERV_PDU_BUFFER buffer are connected through two buses Buf_Out_0 and Buf_Out_1, at inputs of the OUT_UNIT output units.

The writing control unit WR_UNIT is connected, through a bus SAR_PDU_HEADER, to the output unit OUT_UNIT.

The reading control unit RD_UNIT is it too connected to the output unit OUT_UNIT through a bus ENABLE_HEADER.

Both the reading control unit RD_UNIT and the writing control unit WR_UNIT receive the reference clock of the ATM network through a wire ATM_Ref_Byte_Ck of the AAb interface.

The writing control unit WR_UNIT receives an additional service clock signal fnX and receives the Tx_Ck_bite clock signal from the PCM interface, through the DIV_8 unit.

The writing control unit WR_UNIT includes a block SRTS_Tx for the creation of information possibly required to recover the source clock by another AAL1 element in the receipt phase.

The structure of the SRTS_Tx block shall be described below more in detail.

The output unit OUT_UNIT is connected, through the Tx_AAL_DATA bus and the Tx_DATA_Ck wire, to the AAb interface with the ATM layer.

The AAL1_u element operates as follows.

The bit flow AAL_Unit_Data_bit coming from the PCM interface is converted in parallel by the SP_UNIT converter obtaining the Tx_Data signal on 8 bits.

At the same time, the Tx_Ck_Bit clock coming from the PCM interface is divided by 8 by the divider DIV_8 obtaining the Tx_Ck_Byte clock.

Tx_Data information is written inside the SERV_PDU_BUF buffer using the Tx_Ck_Byte signal.

The memory address of the SERV_PDU_BUF buffer where Tx_Data data shall be written time by time, is given on the bus Addr_Wr by the writing control unit WR_UNIT.

The ATM layer controls data transmission by an user application connected to the PCM interface of the AAL1_u element sending to the Tx_AAL_ADDR bus of the AAb interface identification parameters ID_AAL (ATM Adaptation Layer IDentifier) and ID_SSCS (Specific Service Convergence Sublayer Identifier) which univocally identify the AAL1 module and the application.

The address comparator ADDR_COMP_TX compares the ID_AAL.ID_SSCS identifier present on bus Tx_AAL_ADDR with the address stored in the microprocessor interface unit mP_INT_UNIT_Tx.

In case the address recognition occurs, the address comparator ADDR_COMP_TX sends a signal enabling to the reading of the content of buffer SERV_PDU_BUF on the ENABLE wire.

When a complete 47 byte AAL1_SDU is present in the SERV_PDU_BUF buffer, the writing control unit WR_UNIT sends a signal to the reading control unit RD_UNIT on the Cell_Rdy wire.

Then, the reading control unit RD_UNIT controls the reading of data contained in the SERV_PDU_BUF buffer.

The memory address of the SERV_PDU_BUF buffer from which Tx_Data shall be read time by time, is supplied on the Addr_Rd bus by the RD_UNIT reading unit.

Data read time by time by the SERV_PDU_BUFFER buffer are sent to the output unit OUT_UNIT.

Once reading of the AAL1_SDU packet is completed by the SERV_PDU_BUF buffer, the reading unit RD_UNIT sends a CLR_Rdy signal to the writing unit WR_UNIT which signals the complete reading of the 47 bytes AAL1_SDU stored in the SERV_PDU_BUF buffer.

The writing unit WR_UNIT makes also an additional D0 byte containing control information, specific of the ATM class 1 adaptation layer.

This control information contained in the D0 byte is relevant to a sequence counter Seq_COUNT of packets AAL1_SDU transmitted, to a CSI (Convergence Sublayer Indication) indicator, peculiar of the convergence sublayer CS (Convergence Sublayer) of the AAL layer and to parity and cyclic redundancy codes for the correction of the Seq_COUNT sequence counter and CSI indicator errors.

The CSI indicator contains time information RTS (Residual Time Stamp) processed starting from ATM_Ref_Byte_Ck, Tx_Ck_bit and fnX signals, possibly destined to be used in the receipt phase by another AAL1 element for the recovery of the source clock.

In particular this information RTS indicate the deviation of the service clock fnX from the network clock ATM_Ref_Byte_Ck.

The meaning of RTS information shall be explained more in detail below, making reference to fig. 5 showing the structure of the SRTS_Tx block.

The writing unit WR_UNIT directly sends said D0 byte to the output unit OUT_UNIT through the SAR_PDU_HEADER bus.

In fig. 4, the 48-byte information packet resulting from the multiplexing of the 47 byte of the AAL1_SDU packet with the D0 byte, has been indicated with AAL1_PDU (AAL1 Protocol Data Unit).

This information packet AAL1_PDU corresponds to the 48 bytes of the payload of an ATM cell.

The output unit OUT_UNIT receives the information relevant to the address of the AAL1 element and of the connection to the address comparator ADDR_COMP_TX, through the ADDR_Bus bus.

The output unit OUT_UNIT receives also by the reading unit RD_UNIT, the enabling consent to create five bytes, marked in fig. 4 with H0, H1, ..., H4, containing information used by the ATM layer in addition to information relevant to the AAL1 element.

Information included in the five bytes H0, H1, ..., H4 in fact shall be used in the ATM protocol layer to translate parameters identifying the AAL1 (ID_AAL_ID_SSCS) connection, in ATM layer corresponding parameters (VCI, VPI) which shall be inserted into the header of the ATM cell transmitted.

In fig. 4, the 53-byte information packet resulting from the addition of the 48 bytes of the AAL1_PDU packet with the five H0, H1, ..., H4 bytes, has been marked ATM_DU (ATM Data Unit).

Always in figure 4, the meaning of bytes H0, H1,..,H4 is shown. The H0 byte (always assuming 0 value) is used to enable the multiplexing of more AAL on the AAb bus, the H1 byte and the first 4 bits of the H2 byte contain the identifier of connection AAL1 (ID_AAL_SSCS=IDentifier of ATM Adaptation Layer IDentifier of Specific Service Convergence Sublayer); less significant bits of H2, the H3, and the first 3 more significant bits of H4 (all at zero) are reserved to other adaptation layers (AAL 3/4 or AAL5) possibly present on the AAb bus; bit 4 of byte H4 (P) contains the service priority and this priority is "mapped" in the corresponding bit CLP:Cell_Loss_Priority of the ATM cell; less significant bits of byte H4 contain a protection field (Cyclic Redundant Code of 4 bits) of information contained in the whole Header H0, H1,...,H4.

The output unit OUT_UNIT joins bytes H0, H1, ... H4 to AAL1_PDU (47 + 1 byte) data, forming the information packet ATM_DU totaling 53 bytes, on the basis of indications given by the reading control unit RD_UNIT on bus ENABLE_HEADER.

At the same time, the reading unit RD_UNIT takes possess of bus Tx_Data_Start and Tx_Data_Mask and sends signals indicating the starting of the transmission of an information packet ATM_DU, by the AAL1_u towards the ATM layer on said buses, through the AAb interface with the ATM layer, and the validity of the transmitted information.

Then, the output unit OUT_UNIT takes possess of the Tx_AAL_Data bus and sends on said bus, always through the AAb interface with the ATM layer, the 53-byte information packet made before.

At the end of transmission of this information packet, the output unit OUT_UNIT and the reading unit RD_UNIT release the engagement of bus Tx_AAL_Data, Tx_Data_Start and Tx_Data_Mask.

In this way, buses Tx_AAL_Data, Tx_Data_Start and_Data_Mask become newly available and can be used, always in response to commands sent by the ATM layer on buses Tx_AAL_ADDR, Tx_ADDR_MASK and Tx_ADDR_Ck, by the device AAL1 itself or by other AAL devices connected to said buses.

Preferably, the output unit OUT_UNIT sends also a byte clock signal on the Tx_Data_Ck wire of the AAb interface.

Advantageously, reading units RD_UNIT and writing units WR_UNIT, can alternatively enable one of the two memory units BUF_0 and BUF_1 forming the SERV_PDU_BUF buffer sending a signal on the Ch_BUF.

In this way, reading and writing operations inside the buffer SERV_PDU_BUF can be made at the same time.

In a normal operation condition, the 47 bytes of the AAL1_PDU information packet stored inside one of the two memory units BUF_0 or BUF_1 are sent towards the ATM layer before the 47 bytes of the subsequent information packet are collected in the other memory unit.

If the ATM network cannot read a cell before the new cell is written in the SERV_PDU_BUF buffer, the writing unit WR_UNIT sends an OVF overflow signal to the microprocessor (through mP_INT_UNIT_Tx unit).

However, writing operations inside the buffer SERV_PDU_BUF continue and new information is written over the existing ones, even if not yet withdrawn, in the SERV_PDU_BUF buffer.

In this case one or more ATM cells can be lost.

In a preferred embodiment, not shown, data coming out from the serial parallel converter SP_UNIT can be sent outside the AAL1_u element to be furtherly processed, even before being stored in the SERV_PDU_BUF buffer.

For instance, information protection operations can be made according to particular codes, on data coming out from the serial parallel converter SP_UNIT.

Referring to the attached Fig. 5, the structure of SRTS_Tx block of the writing control unit WR_UNIT of the AAL1_u shall be shown more in detail.

The SRTS_Tx block includes a CLOCK_ELAB block, including in its turn a divider by eight SRTS_DIV_8, dividing by 8 the reference clock signal ATM_Ref_Byte_Ck of the AAb interface with the ATM network and a divider by N SRTS_DIV_N, dividing by N the clock signal Tx_Ck_bit of the PCM interface with the HLP application level.

The SRTS_Tx block includes also a multiplexer CLOCK_MUX which selects the fnX clock signal obtained from the network reference clock or the signal coming out from the eight divider SRTS_DIV_8 on the basis of an f_switch signal received from the microprocessor interface unit mP_INT_Unit_Tx.

This f_switch signal specifies the type of PCM interface of the service.

Generally the PCM interface can be of the 2 Mbit/s type or 34 Mbit/s type.

The output fnX of the CLOCK_MUX multiplexer is connected to a counter by 16 SRTS_CNT_16.

The output of the SRTS_CNT_16 counter and the output LD_RTS of the SRTS_DIV_N divider, coinciding with the outputs of the block CLOCK_ELAB, are connected with a register RG_RTS for data storing.

The register output RG_RTS is connected to a MUX_RTS multiplexer receiving also SC_CNT signals relevant to the sequence number of the present information packet AAL1_SDU.

The output of the MUX_RTS multiplexer is processed by a combinatory logic ADD_0_TO_EVEN whose output, coinciding with the output of the whole block SRTS_Tx, represents the CSI value of the D0 byte of the AAL1_PDU information packet.

The SRTS_Tx block operates as follows:

The divider SRTS_DIV_8 of the CLOCK_ELAB block divides by eight the reference clock signal ATM_Ref_Byte_Ck of the ATM network generally assuming the 19.44 MHz value.

The CLOCK_MUX multiplexer, on the basis of the f_switch value, supplies an fnx signal representing either the fnX derived by the network clock, or the ATM_Ref_Byte signal.

The f_switch signal indicates the nominal value, among possible ones assuming the Tx_Ck_bit signal of the PCM interface.

Generally the nominal value assumed by the Tx_Ck_bit signal can be 2.048 MHz or 34.368 MHz.

The fnx output of the CLOCK_MUX multiplexer assumes, in the case of Tx_Ck_bit equal to 2.048 MHz, the 2.43 MHz value, while in case of Tx_Ck_bit equal to 34.368 MHz, it assumes the 38.88 MHz value.

Said value is converted on 4 bits by counter SRTS_CNT_16 and is written inside the register RG_RTS using the LD_RTS signal.

The LD_RTS signal is generated by the SRTS_DIV_N divider with an appropriate division made on the clock signal Tx_Ck_bit coming from the PCM interface.

The N value can assume, for instance, value 3008, equal to the number of bits contained in 8 packets AAL1_SDU (8 * 47 = 376 Byte = 3008 bit).

In this way, the value contained in the register RG_RTS indicates the deviation of the service clock versus the network clock or a derivative of the network clock calculated on a known number (e.g. 3008) of periods of the service clock.

The MUX_RTS multiplexer and the combinatory logic ADD_0_TO_EVEN insert more consecutive information packets AAL1_PDU and information contained in the RG_RTS register into the CSI bit of the D0 byte.

This, information relevant to the clock deviation is sent towards the ATM network through a multiframe structure consisting of several information packets AAL1_PDU (for instance 8), each one of them included in a different ATM cell.

Since bits contained in the RG_RTS register are only 4, a multiframe structure consisting of four AAL1_PDU packets only can be used to completely transfer the information relevant to the clock deviation.

Preferably, the four bits contained in the RG_RTS register are not included into four AAL1_PDU contiguous packets, for instance, in a packets every two packets.

In this way it is possible to transmit other information using the free CSI bit.

Information contained in the CSI bit of cells transmitted by the AAL1_u element shall be used by an AAL1_d element in receipt, described below, to obtain the source clock recovery.

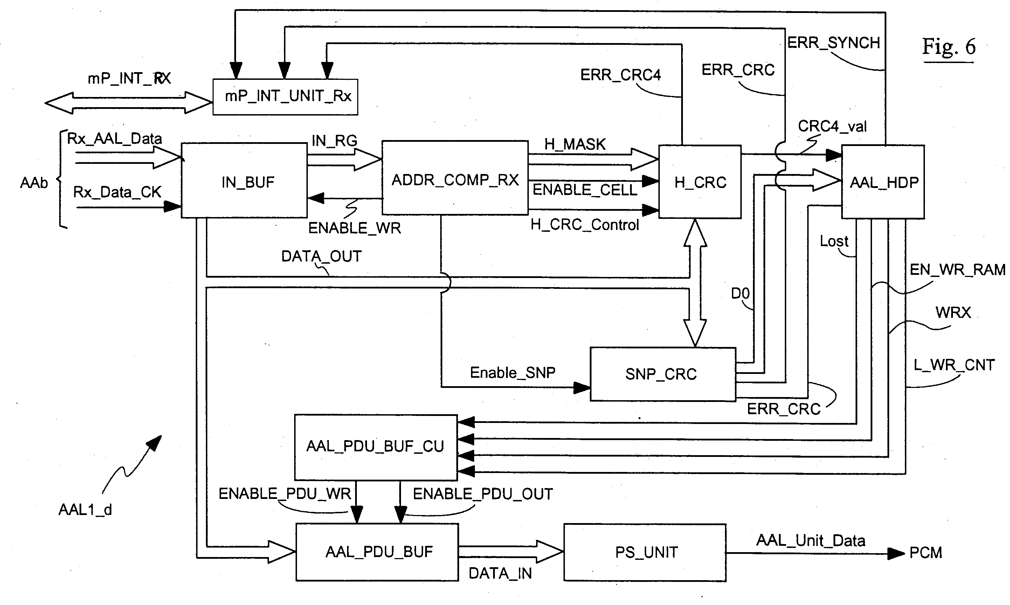

Making reference to the attached Fig. 6, a hardware implementation of the ATM layer, receipt side has been identified with an AAL1_d element.

The AAL1_d element is connected, through the AAb interface, to the ATM layer, through the PCM serial interface, with the HLP application level.

The AAL1_d element includes an input buffer IN_BUF with inputs connected to buses Rx_AAL_Data and to the wire Rx_Data_Ck of the AAb interface with the ATM layer.

The buffer IN_BUF includes two separate memory units IN_BUF_0 and IN_BUF_1 each one able to store 53 bytes in an information packet.

The AAL1_d element includes an address comparator ADDR_COMP_RX with inputs connected to IN_RG outputs of the IN_BUF buffer and to Rx_ADDR outputs of a microprocessor interface mP_INT_UNIT_Rx.

The main function of the address comparator ADDR_COMP_RX consists in the comparison of the addresses of information segments ATM_DU stored in the buffer IN_BUF with an address fed on the bus Rx_ADDR by the microprocessor interface unit mP_INT_UNIT_Rx.

The value of the address supplied by the mP_INT_UNIT_Rx unit can be set from the outside through sending of appropriate signals on the microprocessor interface mP_INT_Rx of the mP_INT_UNIT_Rx unit.

The output of DATA_Out data of the IN_BUF buffer is connected to a buffer AAL_PDU_BUFFER whose data output DATA_IN is connected in its turn to a parallel serial converter PS_UNIT.

The output AAL_Unit_Data of the PS_UNIT converter is finally connected to the PCM interface with HLP application layer.

The AAL_PDU_BUFFER buffer is controlled, through two wires ENABLE_PDU_WR and ENABLE_PDU_OUT, by a control unit AAL_PDU_BUF_CU.

Outputs DATA_OUT of the IN_BUF buffer are also connected to an H_CRC unit to check errors in the five bytes H0, H1, ..., H4 of the header of the information segment ATM_SDU.

The H_CRC unit is connected, through wire ERR_CRC, to the microprocessor interface unit mP_INT_UNIT_Rx and through wire CRC4_val to the AAL_HDP block.

Outputs DATA_Out of the IN_BUF buffer are also connected to an SNP_CRC unit to check errors in the D0 byte of the information segment ATM_DU.

The SNP_CRC unit is connected, through an ERR_CRC wire, to the microprocessor interface unit mP_INT_UNIT_Rx.

The AAL1_d element includes also a header processor AAL_HDP which checks the correctness of the arrival sequence of ATM cells and the correctness of their heading.

The AAL1_d element operates as follows.

Signals Rx_AAL_Data containing information packets ATM_DU of 53 bytes corresponding to ATM cells transmitted by the ATM network, are stored, using the clock signal Rx_Data_Ck, inside the IN_BUF buffer.

Inside H1 and H2 bytes of the header of the ATM_DU packet, information is contained, corresponding to ID_AAL.ID_SSCS parameters, including the address of the AAL1 element to which ATM_DU packets are destined.

The address comparator ADDR_COMP_RX compares the address contained in H1 and H2 bytes of the cell entering the IN_BUF buffer with the address stored in the microprocessor interface unit mP_INT_UNIT_Rx.

In case the address is recognized, the address comparator ADDR_COMP_RX generates an ENABLE_CELL signal directed to the H_CRC unit, it generates time signals H_MASK directed to the H_CRC unit to analyze H1, H4 and D0 bytes, it generates an ENABLE_WR signal towards the IN_BUF buffer and generates control signals towards the SNP_CRC (Enable_SNP) unit and towards the H_CRC (H_CRC_Control) unit.

For the whole duration of the ENABLE_WR signal, bytes reaching the bus Rx_AAL_Data are written inside the IN_BUF buffer. Inside the IN_BUF_0 buffer lower order bytes (even) are written, while higher bytes (odds) are written in the IN_BUF_1.

The H_CRC unit, once the ENABLE_CELL signal is received, uses H_MASK signals to receive H1, H2, H3 and H4 bytes, it calculates the CRC code and compares it with the CRC code contained in byte H4 checking therefore the total correctness of the header of the ATM_DU packet.

In case of error, the H_CRC unit sends an ERR_CRC4 signal towards the microprocessor interface unit mP_INT_UNIT_Rx. The H_CRC unit sends as well a CRC4_val signal to the AAL_HDP block to signal the result of the operation made.

The SNP_CRC unit, once the Enable_SNP signal is received, receives the D0 byte, it calculates the CRC code and compares it with the CRC bit contained in byte D0.

In case of error, the SNP_CRC unit tries to correct, if possible, the D0 byte starting from the CRC code, otherwise it sends an ERR_CRC signal towards the microprocessor interface unit mP_INT_UNIT_Rx.

The header processor AAL_HDP, once the CRC4_Val signal is received, checks, analyzing the value of the sequence counter Seq_COUNT of the D0 byte, the correct sequence of cells determining the presence of lost cells or cells out of sequence.

In case lost or out of sequence cells are present, the header processor AAL_HDP generates an exception indication ERR_SYNCH to the microprocessor interface unit mP_INT_UNIT_Rx which generates an interrupt to the microprocessor.

Furthermore, the AAL_HDP header processor, generates LOST, EN_WR_RAM, WRX and L_WR_CNT signals controlling the writing of the information packet contained in the IN_BUF buffer inside the AAL_PDU_BUF_CU buffer.

The AAL_PDU_BUF_CU control unit sends ENABLE_PDU_WR writing signals and ENABLE_PDU_OUT reading signals to the AAL_PDU_BUFFER buffer.

Following the receipt of the ENABLE_PDU_OUT reading signal, the AAL_PDU_BUFFER buffer sends on its DATA_IN outputs. data stored in the same, to the PS_UNIT parallel serial converter.

The PS_UNIT parallel serial converter, finally sends a serial flow of bits to the PCM interface on its AAL_Unit_Data output.

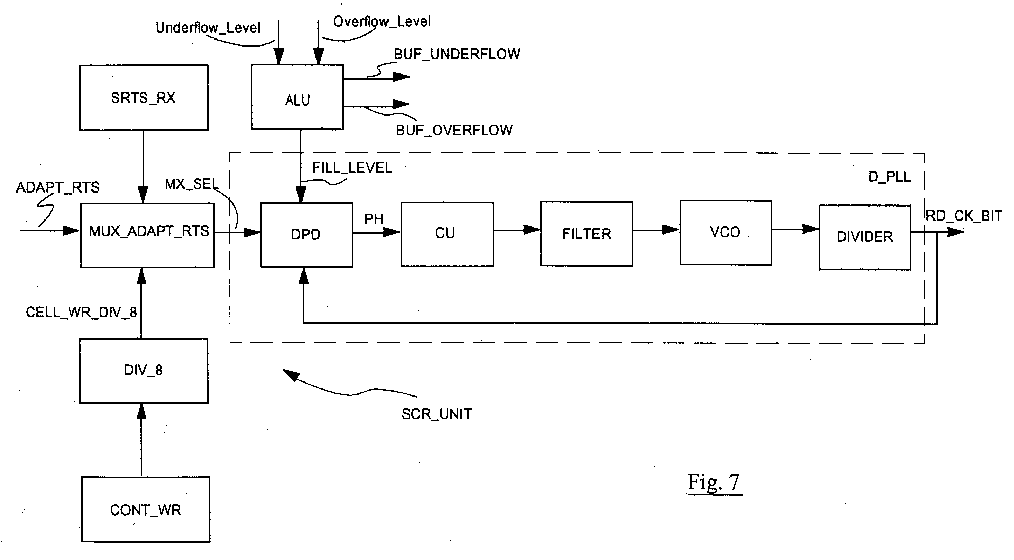

Referring to the attached figure 7 a device shall be described, globally identified as SCR_UNIT (Source Clock Recovery UNIT), for the recovery of the transmission clock by the AAL1_d element.

The SCR_UNIT device includes an ALU arithmetic logic unit, analyzing the filling status of the AAL_PDU_BUFFER buffer.

During reading and writing operations in/from the AAL_PDU_BUFFER buffer, the ALU unit compares the filling level of the AAL_PDU_BUFFER buffer with two Overflow_Level and Underflow_Level values set during the device starting configuration phase.

When the filling level of the AAL_PDU_BUFFER buffer is higher than the Overflow_Level level, the ALU unit issues a BUF_OVERFLOW signal towards the ALL_PDU_BUF_CU unit previously mentioned, referring to figure 6.

When the filling level of the AAL_PDU_BUFFER buffer is lower than the Underflow_Level value, the ALU unit issues a BUF_UNDERFLOW signals always towards the AAL_PDU_BUF_CU unit. Said two BUF_OVERFLOW and BUF_UNDERFLOW signals are advantageously made available also outside the device to be used for instance to control a phase locked loop circuit in up-down mode.

The ALU unit issues also a FILL_LEVEL signal indicating the filling level of the AAL_PDU_BUFFER buffer.

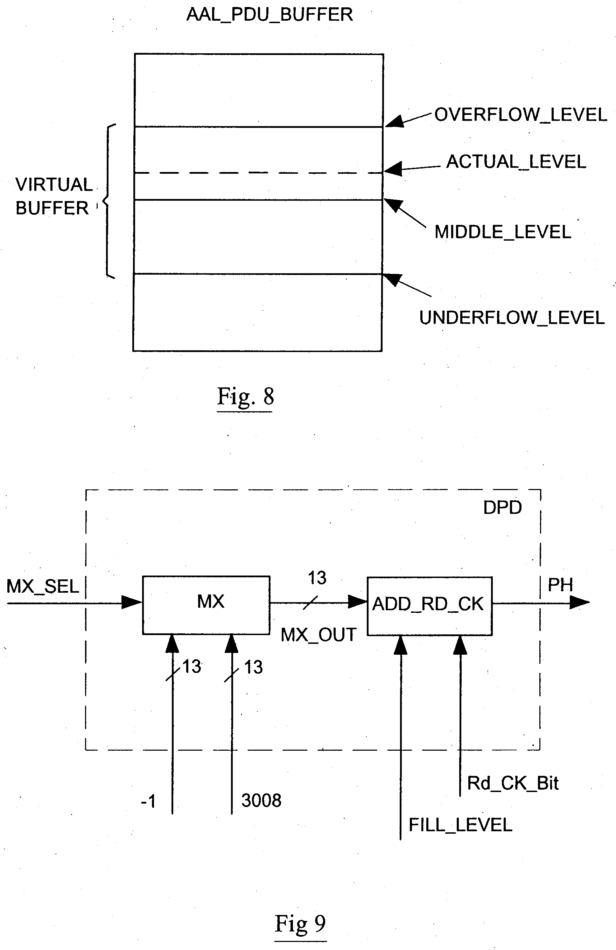

Making reference to the attached figure 8 the method according to the invention shall be now described to obtain a value, represented by the FILL_LEVEL signal, indicating an estimate of the difference between the frequency of the source clock and the frequency of the receiver on the basis of the filling level of the AAL_PDU_BUFFER buffer of the receiver AAL1 device.

During the device initial configuration, a Middle Level value is determined, indicating the middle value in normal operation conditions of the filling level of the AAL_PDU_BUFFER buffer.

Afterwards, the values of two Underflow Level and Overflow Level thresholds are determined, indicating the minimum and maximum acceptable levels, respectively of the filling level of the AAL_PDU_BUFFER buffer.

The values of said thresholds are selected in such a way that the "virtual buffer" VIRTUAL BUFFER determined by the same inside the AAL_PDU_BUFFER physical buffer is sufficiently wide to absorb the "jitter" (or Cell Delay Variation) introduced by the ATM network connecting the AAL1 source device to the AAL1 destination device (see also figure 8 to this purpose).

In fact, as it is well known, the nodes of the ATM network, being the ATM technique an asynchronous one, can introduce alterations (delays, queuing, burst grouping) of the original cell timing.

The values of these thresholds are also selected in order that the size of the " virtual buffer " determined by the same is as lower as possible, consistently with the "jitter" absorption need.

This because the introduction of the buffer inside the AAL1 device implies the introduction of ever increasing delays as the capacity of buffers themselves grows.

Once Middle Level, Overflow Level and Underflow Level levels are determined, the FILL_LEVEL level is determined by difference between the actual value Actual Level of the AAL_PDU_BUFFER buffer filling level and the Middle Level, referred to the width of the band included between Overflow Level and Underflow Level values.

Thus, one could appreciate that the " virtual buffer " which is created, supplies a useful estimate of the difference between the source clock frequency and the receiver frequency in addition to enable the absorption of the "jitter" introduced by the ATM network.

Particular appreciation could be given to the fact that, since Overflow Level, Underflow Level and Middle Level values can be modified at choice, it is possible to "customize" the compensation buffer of the "jitter" on the basis of the characteristics of the ATM network, to which the AAL1 device is connected.

This helps the increase of the operation flexibility and the versatility of the AAL1 device according to the present invention.

Always referring to figure 7, the SCR_UNIT device includes a signal recovery block RTS, identified as a whole with SRTS_Rx, for the recovery of information RTS included, in the transmission phase, by the SRTS_Tx block of the AAL1_u element.

The SRTS_Rx block gives an ADD_M signal representing an estimate of data transmission frequency calculated starting from RTS information.

When an ADAPT_RTS signal changes, a multiplexer MUX_ADAPT_RTS selects whether to present ADD_M of the SRTS block or a Cell_Wr_Div_8 signal indicating the frequency of the multiframe information packets consisting of 8 AAL1_PDUs.

Profitably, the Cell_Wr_Div_8 signal is simply obtained dividing by 8 the Cell_Wr value, obtained from a COUNT_WR counter, indicating the writing frequency of information packets AAL1_PDU inside the AAL_PDU_BUFFER buffer.

The output of the MUX_ADAPT_RTS multiplexer and the FILL_LEVEL output of the logic arithmetic unit ALU are connected to a digital PLL, identified with D_PLL.

The digital PLL D_PLL includes a digital phase detector DPD (Digital Phase Detector) performing an estimate PH of the difference between the frequency of the transmitter and that of the receiver, received with a feedback loop.

Said frequency of the receiver is given by an oscillator, not shown, calibrated at the rated value fs of the receiver service frequency.

In a preferred embodiment, the PH signal enters a correction unit CU, inside which it is furtherly processed.

The PH signal enters then in a digital filter FILTER and a control unit VCO.

The signal coming out from the control unit VCO enters a divider DIVIDER supplying the signal RD_Ck_bit.

With a feedback loop, the RD_Ck_bit signal is brought to the digital phase detector DPD and represents the output of the SCR_UNIT device.

Referring to the attached figure 9, the digital phase comparator DPD of figure 7 shall be described more in detail.

The DPD comparator includes a multiplexer MX able to supply on its 13 bit MX_OUT output, the values present on one of its two inputs MX_IN_1 and MX_IN_2 as the value present on its selection input MX_SEL changes.

On the 13 bit MX_IN_1 input, a value is present representing the numeric constant -1, while on the 13 bit MX_IN_2 input, a value is present representing a numeric constant absolutely equal to the N value used in the SRTS_Tx block of the transmitter to divide the transmission clock Tx_Ck_bit, in the previous example 3008, equal to the number of bits contained in 8 packets AAL1_SDU (8 * 47 = 376 Byte = 3008 bit).

The value present on the selection input MX_SEL of the multiplexer MX is represented by the output of the MUX_ADAPT_RTS multiplexer.

The MX_OUT output of the multiplexer MX, which can assume only values -1 or 3008, is brought to the input of an adder ADD_RD_CK, time set on the basis of the Rd_Ck_bit signal.

The reset input of the adder ADD_RD_CK is connected to the FILL_LEVEL output of the logic arithmetic unit ALU.

The output of the adder ADD_RD_CK coincides with the output of the digital phase comparator DPD.

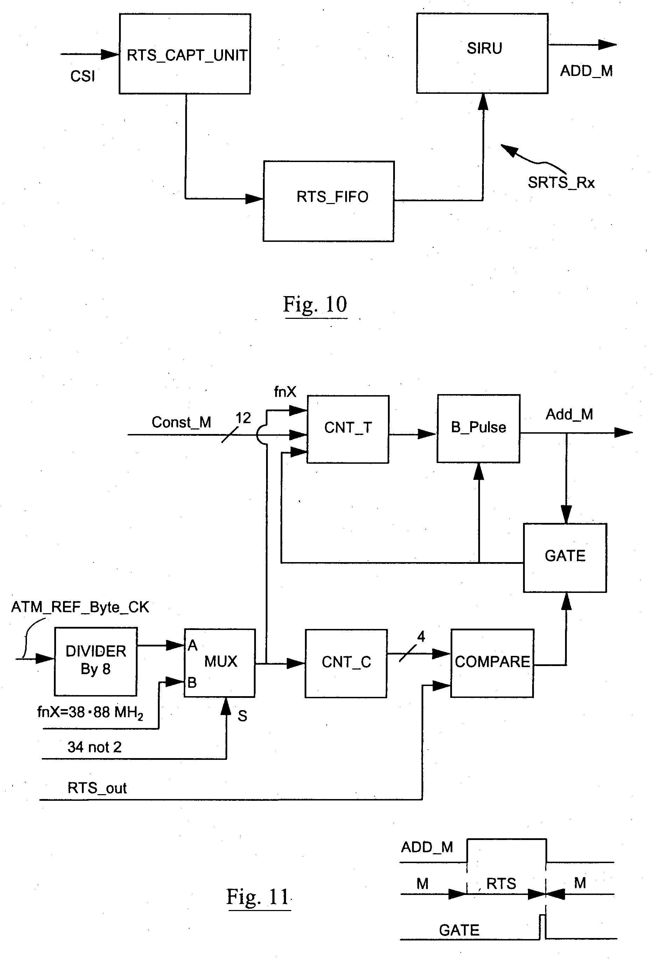

Referring to the attached fig. 10, the structure of the SRTS_Rx block of fig. 7 shall be described more in detail.

The SRTS_Rx block includes a capture unit RTS, marked with RTS_CAPT_UNIT connected to a memory FIFO RTS_FIFO and to a reconstruction unit of the clock SIRU (Source Interval Reconstruction Unit).

The capture unit RTS_CAPT_UNIT receives the values of each single bit CSI of eight consecutive cells and inserts them into the RTS_FIFO memory.

Data stored in the RTS_FIFO memory are fed to the reconstruction unit of the clock SIRU which generates the ADD_M signal. This signal indicated the residual deviation (time) of the source frequency versus the network frequency fnX.

Figure 11 details the operation of the SIRU unit (Source clock Interval Reconstruction Unit) of figure 10. The reference frequency for the two supported services (2Mbit/s and 34Mbit/s) is equal to 19.44 for the 2Mbit/s and to 38.88 for the 34Mbit/s, respectively and can be selected - from microprocessor- through the MUX block.

Depending on the service selected, the constant value M for the number of cycles at fnX frequency in the time T (equal to 3008 bits at the service frequency) indicated (recommendation ITU.T I.363) is loaded as count basis, on the CNT_T counter, as measurement reference.
Blocks B_Pulse, Compare and Gate enable to build the Add_M signal whose duration indicates the number of residual cycles at fnX frequency, in the reference time T.

Always referring to figure 7, the SCR_UNIT unit operates as follows.

Should the clock recovery method based on RTS information be active, the multiplexer MUX_ADAPT_RTS supplies the digital PLL D_PLL with the ADD_M signal, indicating the deviation of the service frequency from the transmission network frequency in a pre-set watching time T.

Time T is selected equal to N/fs, in this case 3008/2048MHz or 3008/34.388MHz in order that the RTS information is carried from and referred to 8 information packets AAL1_PDU

The ADD_M signal is created adding the number of "residual cycles" expressed by RTS values included in the 8 AAL1_PDU structure to the number of nominal cycles M at fnx frequency.

Therefore, as soon as the ADD_M signal assumes a high logic value, approximately matching each frame of 8 cells AAL1_PDU, the content of the adder ADD_RD_CK is increased by a value equal to 3008.

When the ADD_M signal assumes a low logic value, the content of the adder ARR_RD_CK is increased by 1 at the arrival of each Rd_Ck_bit signal.

Thus, the value contained inside the adder ADD_RD_CK is proportional to the error between the source transmission frequency and the being recovered destination frequency.

Should the clock recovery method based on the estimate of the filling level of buffer AAL_PDU_BUFFER be active, the multiplexer MUX_ADAPT_RTS supplies the digital PLL D_PLL with the Cell_Wr_Div_8 ADD_M signal.

This cell_wr_div_8 signal assumes a high logic value, just at the arrival of 8 AAL1_PDU packets.

Therefore, at the arrival of 8 AAL1_PDU packets, the content of adder ADD_RD_CK is increased by a value equal to 3008, while it is decreased by 1 in the remaining time instants.

When the filling level of the "virtual buffer " determined inside the AAL_PDU_BUFFER buffer deviates too much from the middle level Middle Level set, the logic arithmetic unit ALU issues the FILL_LEVEL signal resetting the content of the ADD_RD_CK adder, determining the correction of the value of reading frequency of the receiver.

Thus, also in this way. the value contained inside the adder ADD_RD_CK is proportional to the error between the source transmission frequency and the being recovered destination frequency.

Therefore, one could appreciate that supplying the digital phase comparator DPD information of homogeneous type (ADD_M, Cell_Wr_Div_8) both in the case of clock recovery with the adaptation method and with the SRTS method, it is possible to use the same circuit with both the methods.

This considerably simplifies the complexity of the SCR_UNIT unit and enables to considerably save costs.

It can be also appreciated the fact that, in this way, the selection between the two recovery methods of the clock can be simply made changing the selection value ADAPT_RTS of the multiplexer MUX_ADAPT_RTS.

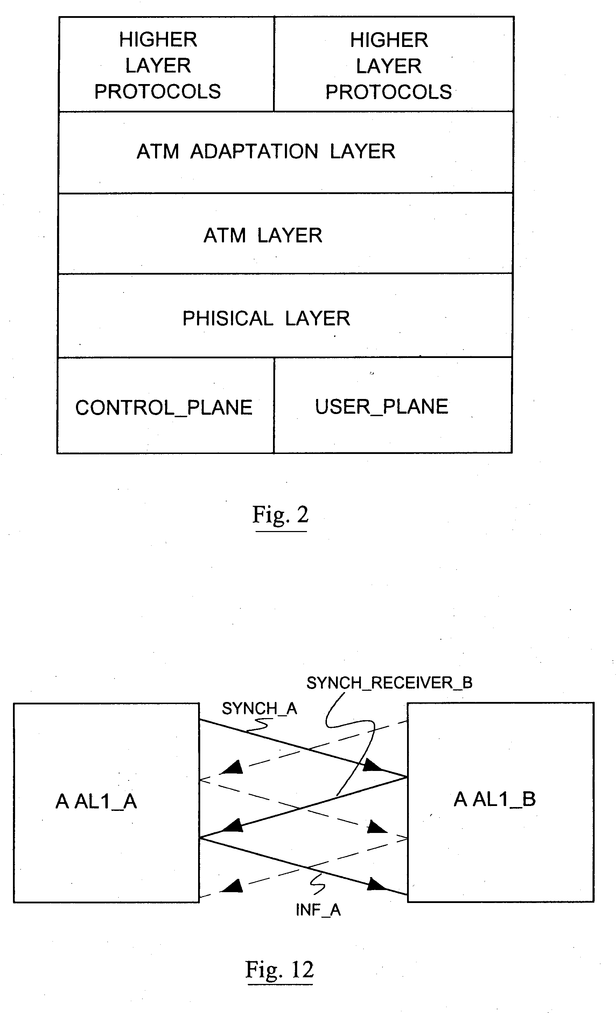

Referring to the attached figure 12, the starting synchronization procedure shall be described, between two devices according to the present invention, the first one used as an example as transmitter and the second one as receiver.

A first AAL1 device according to the present invention, marked in fig. 12 with AAL1_A, starts transmitting towards a second device AAL1_B, information packets having null information content SYNCH_A indicating a synchronization request.

Information packets SYNCH_A are information packets of the ATM_DU type containing, inside the 5 bytes of the header H0, ..., H4, a type identifier qualifying them as packets carrying a synchronization request.

The AAL1_B device, once a given number of information packets of the SYNCH_A type is received, obtains synchronization information from the same and sets at a synchronization condition.

Afterwards, the AAL1_B device transmits information packets SYNCH_RECEIVER_B having null information content indicating an occurred synchronization condition to the device AAL1_A

Also information packets SYNCH_RECEIVER_B are information packets of the ATM_DU type containing, inside the 5 bytes of the header H0, ..., H4, a type identifier qualifying them as packets carrying a signal of occurred synchronization condition.

The AAL1_A device, once information packets of the SYNCH_RECEIVER_B type are received, recognises the occurred synchronization and starts transmitting information packets INF having non null information content towards the device AAL1_B.

The synchronization procedure is perfectly dual and could take place also in the reverse direction, as shown in figure 12 where the AAL1_B device sends synchronization requests SYNCH_B to the AAL1_A device, while the AAL1_A device sends signals of occurred synchronization SYNCH_RECEIVER_A to the AAL1_B device.

In a preferred embodiment, type identifiers of packets SYNCH, SYNCH_RECEIVER and INF consist of two bits I1.I0 of byte H2 of the packets header.

Advantageously, the different types of information packets SYNCH, SYNCH_RECEIVER having null information content are carried on different ATM connections on the basis of the value of bits I1.I0.

The different value of bits I1.I0 enables to translate in different ATM connections the value of field ID_AAL (ATM Adaptation Layer IDentifier) of the header of information packets.

In the receipt phase, the device AAL1 recognized its own address ID_AAL and can recognize, thanks to bits I1.I0, the type of information packet.

It could be appreciated that, in this way, it is possible to assure a certain connection in the ATM network among the different AAL1 devices.

Thanks to the fact that initial cells have null information content, the method according to the invention assures that all the packets containing significant data, even starting ones, are transmitted only after synchronization.

This result in a great advantage since some services carry, just in initial frames, vital recognition and configuration information of transmission methods.

More in general, one could appreciate the fact that address recognition blocks (ADDR_COMP_RX, ADDR_COMP_TX) and transmission control blocks (OUT_UNIT) enable the device of this invention to be multiplexed, together with other adaptation layers, on the ATM layer.

This enables to supply multiservice processing platforms (audio, video, data).

Moreover, this architecture enables the devices controlling traffic parameters (SHAPER) placed at ATM level, to properly manage the information emission.

Such a controller device, knowing traffic parameters of each active connection in the multiplexer, can distribute transmission credits to the different modules in order to correctly multiplex more traffics, even of different nature (video, audio, data, etc.) meeting the relevant service quality.

An additional evident advantage consists in the presence of several separate methods for the recovery of the synchronization clock, enabling the effective utilization of the device networks having different characteristics.

Finally, we offered a device which, thanks to its architectural and use flexibility and to its realization compact characteristic, enables user terminals, servers, service multiplexers to avail of audio-video services carried through the B-ISDN network in ATM technique.

It is clear that what described has been given as an example but is not limited to the same. Changes and modifications are possible without exceeding the protection field of the following claims.

## Claims

1. Device for the implementation of protocol functions of the adaptation layer ATM (AAL) in a B-ISDN network, particularly for flows of data requiring time relation between source and destination, said device (AAL1) being connected, through a serial interface (PCM), to user devices operating at a generic user application level (HLP), characterized in that it is connected through a parallel interface (AAb), both to ATM (ATM_u, ATM_d) devices operating at ATM protocol layer and to other devices of the same type (AAL) through a system having architecture with three separate buses, the first of said three buses (Tx_AAL_DATA, Tx_DATA_CK) being dedicated to data transmission by said device (AAL1), the second one (Rx_AAL_DATA, Rx_DATA_CK) being dedicated to the receipt, through said device (AAL1), of data transmitted by said devices ATM (ATM_u, ATM_d) operating at ATM protocol layer and the third one of said three buses (Tx_AAL_ADDR, Tx_ADDR_MASK, TX_ADDR_CK) being dedicated to receive, through said device (AAL1), transmission enabling signals transmitted by a control and supervision unit (SHAPER), being data transiting on said first bus (Tx_AAL_DATA, Tx_DATA_CK) dedicated to the transmission and on said second bus (Rx_AAL_DATA, Rx_DATA_CK) dedicated to the receipt, structured as information packets (ATM_DU) including identifiers (ID_AAL, ID_SSCS) of the device (AAL1) itself and of the application, said device (AAL1) including means (ADDR_COMP_TX) for the recognition of a transmission enabling signal (Tx_AAL_ADDR, TX_ADDR_MASK), transiting on said third bus (Tx_AAL_ADDR, Tx_ADDR_MASK, TX_ADDR_CK), concerning the device (AAL1) itself, means (OUT_UNIT) for control acquisition at receipt of said enabling signal, of said first bus (Tx_AAL_DATA, Tx_DATA_CK), and means (ADDR_COMP_RX) for the recognition of data transiting on said second bus (Rx_AAL_DATA, Rx_DATA_CK) directed towards the device itself (AAL1).

2. Device according to claim 1, characterized in that said information packets (ATM_DU) transiting on said first bus (Tx_AAL_DATA, Tx_DATA_CK) and on said second bus (Rx_AAL_DATA, Rx_DATA_CK) are 53 byte information packets consisting of a 48-byte information packet (AAL1_PDU) and of 5 bytes of header (H0, H1, ..., H4).

3. Device according to claim 2, characterized in that said 5 bytes of the header (H0, H1, ..., H4) of said information packets (ATM_DU) include information necessary to create, by the ATM protocol layer, correct identifier parameters of ATM cells destined to be formed starting from said information packets (ATM_DU).

4. Device according to claim 2, characterized in that said information packet of 48 bytes (AAL1_PDU) consists of a 47 byte payload(AAL1_SDU) and of an additional control byte (D0) containing control information of the ATM class 1 adaptation layer.

5. Device according to claim 4, characterized in that said additional control byte (D0) includes a sequence counter (Seq_COUNT) of information packets (AAL1_PDU) transmitted.

6. Device according to claim 4, characterized in that said additional control byte (D0) includes an indicator (CSI) of the convergence sublayer CS of the ATM adaptation layer (AAL).

7. Device according to claim 2, characterized in that the upstream portion (AAL1_u) for the adaptation of data coming from said serial interface (PCM) towards said parallel interface (AAb) includes:
- a serial-parallel converter (SP_UNIT) connected (AAL_UNIT_DATA_BIT, TX_Ck_BIT) to said serial interface (PCM);
- a service buffer (SERV_PDU_BUF) connected (TX_DATA) to said serial-parallel converter (SP_UNIT);
- a writing control unit (WR_UNIT) connected (Addr_Wr) to said service buffer (SERV_PDU_BUF) for the control of writing operations inside said service buffer (SERV_PDU_BUF) and for the creation, inside said service buffer (SERV_PDU_BUF), of an information packet (AAL1_PDU);
- an address comparator (ADDR_COMP_TX) connected (Tx_AAL_ADDR, Tx_ADDR_MASK, Tx_ADDR_Ck) to said parallel interface (AAb) to recognize the presence, on said parallel interface (AAb), a transmission control concerning the application process implemented by said user device connected to said serial interface (PCM);
- a data reading control unit (RD_UNIT) connected (Addr_Rd) to said service buffer (SERV_PDU_BUF) to control reading operations from said service buffer (SERV_PDU_BUF), connected (ENABLE) to said address comparator (ADDR_COMP_TX) to start reading operations, connected (Tx_Data_En, Tx_Data_Start, Tx_Data_Mask) to said parallel interface (AAb) to send transmission control signals towards said ATM protocol layer;
- means (WR_UNIT) to create said 5 bytes of the header (H0, ..., H4);
- an output control unit (OUT_UNIT) connected (Buf_Out_0, Buf_Out_1) to said service buffer (SERV_PDU_BUF), connected (SAR_PDU_HEADER) to said means (WR_UNIT) to create the 5 bytes of the header (H0,..,H4), connected (ENABLE_HEADER) to said reading control unit (RD_UNIT), connected (ADDR_Bus) to said address comparator (ADDR_COMP_Tx) and connected (Tx_AAL_Data, Tx_Data_Ck) to said parallel interface (AAb),
the address comparator (ADDR_COMP_Tx) sending a signal (ENABLE) to the reading control unit (RD_UNIT) controlling the transmission of the information packet of 48 bytes (AAL1_SDU) and of the 5-byte information packet (H0, ..., H4) towards the output control unit (OUT_UNIT) which sends an information packet for a total of 53 bytes (ATM_DU) to the parallel interface (AAb) with the ATM layer.

8. Device according to claim 7, characterized in that said service buffer (SERV_PDU_BUF) consists of two separate portions (BUF_0, BUF_1) essentially having the same capacity, so that reading and wiring operations from/to said service buffer (SERV_PDU_BUF) can be made at the same time.

9. Device according to claim 7, characterized in that it includes a coding block for the processing of data coming out from said serial parallel converter (SP_UNIT) before the storing inside said service buffer (SERV_PDU_BUF).

10. Device according to claim 7, characterized in that said address comparator (ADDR_COMP_Tx) of said upstream portion (AAL1_u) is connected (Tx_ADDR) to a microprocessor interface (mP_INT_UNIT_Tx) to set the address of said application process.

11. Device according to claim 7, characterized in that said information packet stored in said service buffer (SERV_PDU_BUF) of said upstream portion (AAL1_u) has 47 byte size (AAL1_SDU), that said writing control unit (WR_UNIT) of said upstream portion (AAL1_u) includes means to create an additional control byte (D0) containing control information of the ATM class 1 adaptation layer and a sequence indicator (Seq_COUNT) of information packets (ATM_SDU) transmitted, and that said output control unit (OUT_UNIT) includes means to add said additional control byte (D0) to said 47-byte information packet (AAL1_SDU) forming an information packet of 48 bytes in total (AAL1_PDU).

12. Device according to claim 11, characterized in that said writing control unit (WR_UNIT) includes a block (SRTS_Tx) for the creation of information (CSI) relevant to the source clock of the application and for the insertion of said information (CSI) inside said additional control byte (D0) of information packets (ATM_DU) transmitted, said information relevant to the application source clock being obtained from a service clock signal (fnX) and from an application clock signal (Tx_Ck_bit) received by said serial interface (PCM).

13. Device according to claim 12, characterized in that said block (SRTS_Tx) for the creation of information (CSI) relevant to the source clock of the service includes means (CLOCK_ELAB, RG_RTS, MUX_RTS, ADD_0_TO_EVEN) for the insertion of information (CSI) relevant to the source clock inside the additional control bytes (D0) of some particular information packets only (ATM_DU) among all information packets transmitted by said device (AAL1).

14. Device according to claim 2, characterized in that the downstream portion (AAL1_d) for the adaptation of data coming from said parallel interface (AAb) towards said serial interface (PCM) (AAL1_d) includes:
- an input buffer (IN_BUF) connected (Rx_AAL_Data, Rx_Data_Ck) to said parallel interface (AAb) to store said information packets of 53 bytes (ATM_DU) coming from the ATM layer;
- an address comparator (ADDR_COMP_Rx) connected (IN_RG, ENABLE_WR) to said input buffer (IN_BUF) to recognize the presence in said input buffer (IN_BUF), of an information packet concerning the application process implemented by said user device connected to said serial interface (PCM);
- a service buffer (AAL_PDU_BUFFER) connected (DATA_OUT) to said input buffer (IN_BUF);
- a parallel-serial converter (PS_UNIT) connected (DATA_IN) to said service buffer (AAL_PDU_BUFFER) and connected (AAL_Unit_Data) to said serial interface (PCM);
- an error check unit (H_CRC) in said 5 header bytes (H0, ..., H4) of the information packet stored in said input buffer (IN_BUF) connected (DATA_OUT) to said input buffer (IN_BUF) and connected (H_MASK, ENABLE_CELL, H_CRC_Control) to said address comparator (ADDR_CMP_Rx);
- a header processor (AAL_HDP) connected (CRC4_val) to said error check unit (H_CRC) and connected (LOST, EN_WR_RAM, WRX, L_WR_CNT) to a control unit (AAL_PDU_BUF_CU) of said service buffer (AAL_PDU_BUFFER) to check writing operations inside said service buffer, the address comparator (ADDR_COMP_Rx) being suitable to send a signal (ENABLE_WR) to the input buffer (IN_BUF) to store data coming from the parallel interface (AAb) and suitable to send an enabling signal (ENABLE_CELL) to the error check unit (H_CRC) in the 5-byte header (H0, ..., H4),
the check unit (H_CRC) being suitable to send in its turn a signal (CRC4_val) to the header processor (AAL_HDP) to enable (LOST, EN_WR_RAM, WRX, L_WR_COUNT) the writing of data corresponding to the 48-byte payload (AAL1_PDU) of the information packet of 53 bytes (ATM_DU) contained in the input buffer (IN_BUF) in the service buffer (AAL_PDU_BUFFER) through said control unit (AAL_PDU_BUF_CU), said control unit controlling also the sending of said data towards the serial interface (PCM).

15. Device according to claim 14, characterized in that said input buffer (IN_BUF) of said downstream portion (AAL1_d) consists of two separate portions (IN_BUF_0, IN_BUF_1) having essentially equal capacity, so that reading and writing operations from/to said input buffer (IN_BUF) can be made at the same time.

16. Device according to claim 14, characterized in that said address comparator (ADDR_COMP_Rx) of said downstream portion (AAL1_u) is connected (Rx_ADDR) to a microprocessor interface (mP_INT_UNIT_Rx) to set the address of said application process.

17. Device according to claim 14, characterized in that said 53 byte information packet (ATM_DU) coming from the ATM layer includes an additional control byte (D0) containing control information characteristic of the ATM adaptation layer class 1 and a sequence counter (Seq_COUNT) of information packets (AAL1_PDU) transmitted and that said header processor (AAL_HDP) includes means to analyze the values of sequence counters (Seq_COUNT) present in information packets stored time by time in said input buffer (IN_BUF).

18. Device according to claim 17, characterized in that said header processor (AAL_HDP) of said downstream portion (AAL1_d) is connected (ERR_SYNCH) to a microprocessor interface (mP_INT_UNIT_Rx) to transmit, an exception signal (ERR_SYNCH), once the presence of information packets (AAL1_PDU) out of sequence is determined.

19. Device according to claim 17, characterized in that said additional control byte (D0) includes also parity and cyclic redundancy codes for the control of the presence and correction of errors possibly present in said byte (D0), and that said downstream portion (AAL1_d) of said device (AAL1) includes a unit (SNP_CRC) for the control and correction of errors present in said additional control byte (D0).

20. Device according to claim 19, characterized in that said unit (SNP_CRC) to check and correct errors present in said additional control byte (D0) is connected (ERR_CRC) to a microprocessor interface (mP_INT_UNIT_Rx) to transmit an exception signal, once the presence of errors in said additions control byte (D0) and the impossibility to correct said errors is determined.

21. Device according to claim 14, characterized in that inside said service buffer (AAL_PDU_BUFFER) a virtual buffer (VIRTUAL BUFFER) is created, whose capacity parameters vary according to the values assumed by the three parameters, indicating the minimum accepted filling value (Underflow Level) of said service buffer (AAL_PD_BUFFER), the mean estimated filling value (Middle Level) of said service buffer (AAL_PDU_BUFFER) and the maximum accepted filling value (Overflow Level) of said service buffer (AAL_PD_BUFFER), respectively.

22. Device according to claim 14, characterized in that said downstream portion (AAL1_d) includes a device (SCR_UNIT) for the recovery of the source transmission clock.

23. Device according to claim 22, characterized in that said additional control byte (D0) includes also information (CSI) relevant to the source clock of the application, that said device (SCR_UNIT) for the recovery of the source clock includes:
- a recovery unit (SRTS_Rx) of said information (CSI) relevant to the source clock of the application supplying a signal RTS (ADD_M) indicating an estimate of data transmission frequency calculated on a watching time (T) equal to the arrival time of a number K of information packets (AAL1_PDU);
- means (COUNT_WR, DIV_8) supplying a cell writing signal (Cell_WR_Div_8), homogeneous to said signal RTS (ADD_M), indicating the writing frequency of a frame consisting of a number K of said information packets (AAL1_PDU) inside said service buffer (AAL_PDU_BUFFER);
- a multiplexer (MUX_ADAPT_RTS) supplying at output said signal RTS (ADD_M) or cell writing signal (CELL_WR_DIV_8) as a selection signal (ADAPT_RTS) varies;
- a logic arithmetic unit (ALU) supplying a filling signal (FILL_LEVEL) indicating the deviation between the filling level (Actual Level) of said service buffer (AAL_PDU_BUFFER) and a pre-set value indicating the mean estimated occupation value (Middle Level); and
- a digital PLL (D_PLL) tracking the frequency of the transmitter setting the frequency of the receiver (RD_CK_Bit) according to said signal RTS (ADD_M) or of said cell writing signal (CELL_WR_DIV_8) and of said filling signal (FILL_LEVEL).

24. Device according to claim 23, characterized in that said digital PLL (D_PLL) includes a digital phase comparator (DPD) performing an estimate (PH) of the difference between the transmitter estimated frequency (ADD_M, Cell_WR_Div_8) and the receiver frequency, received with a feedback loop.

25. Device according to claim 24, characterized in that said digital phase comparator (DPD) includes a multiplexer (MX) receiving on its selection input (MX_SEL) said signal carrying the estimated frequency of the transmitter (ADD_M o Cell_WR_Div_8) and supplying on its outputs (MX_OUT) the numeric value -1 or a numeric value equal to the number of bits contained in said number K of information packets (AAL1_PDU), being the outputs of said multiplexer connected to the inputs of an adder (ADD_RD_CK) timed on the basis of the receiver frequency (Rd_CK_Bit) and with reset input connected to a filling signal (FILL_LEVEL) generated by said logic arithmetic unit (ALU).

26. Device according to claim 23, characterized in that said digital PLL (D_PLL) includes a digital filter (FILTER), a control unit (VCO) and a divider (DIVIDER).

27. Device according to claim 23, characterized in that said (SRTS_Rx) recovery unit of said information relevant to the source clock includes a capture unit RST RTS (RTS_CAPT_UNIT) connected to a FIFO memory (RTS_FIFO) and to a clock reconstruction unit (SIRU).

28. Device according to claim 27, characterized in that said clock reconstruction unit (SIRU) is suitable to generate a signal (ADD_M) whose duration is related to the number of residual cycles (RTS) at the reference frequency (fnX) obtained from the network frequency of the reference period consisting of a pre-set number of information packets (AAL1_PDU) at the source service frequency, said signal being used by said digital PLL to reconstruct the source clock.

29. Device according to claim 23, characterized in that said logic arithmetic unit (ALU) supplies said filling signal (FILL_LEVEL) referred also to the width of a band included between two values indicating the minimum (Underflow Level) and maximum accepted value (Overflow Level) for occupation of said service buffer (AAL_PD_BUFFER).

30. Method for the synchronization between two devices operating at an ATM adaptation layer (AAL) in a B-ISDN network using two devices according to claim 2, characterized in that it includes the following phases for each one of said devices to be synchronized:
- transmit, through a second device AAL (AAL1_A), information packets (SYNCH_A) with null information content, indicating a synchronization request towards a second device AAL (AAL1_B) with which said AAL transmitting device (AAL1_A) shall synchronize;
- receive, through said second device AAL (AAL1_B), a given number of said information packets (SYNCH_A) indicating the synchronization request and obtain from said information packets synchronization information;
- on the basis of said synchronization information, place said second AAL (AAL1_B) device in a synchronization condition;
- transmit, through said first device AAL (AAL1_B), information packets (SYNCH_RECEIVER_B) with null information content indicating the occurred synchronization condition with said first device AAL (AAL1_A);
- receive, through said first device AAL (AAL1_A), said information packets (SYNCH_RECEIVER_B) indicating the occurred synchronization condition of said second device AAL (AAL1_B);
- recognize, through said first device AAL (AAL1_A), the occurred synchronization of said second AAL device and start the transmission of information packets (INF) having non null information content between said first device AAL (AAL1_A) and said second device AAL (AAL1_B).

31. Method according to claim 30, characterized in that the header (H0,...,H4) of said information packets (ATM_DU) includes information (I1.I0) suitable to identify the type of information packet (SYNCH, SYNCH_RECEIVER, INF) and that said information packets having null information content (SYNCH, SYNCH_RECEIVER) are transmitted by said first device towards ATM connections differing one from the other according to the variation of the information packet.
